# FASCICULE DE BREVET EUROPEEN

(11) **EP 3 471 288 B1**
(45) Date de publication et mention de la délivrance du brevet: **18.03.2020**
(21) Numéro de dépôt: 18198930.2
(22) Date de dépôt: 05.10.2018
(51) Int. Cl.: H04B 7/06, H01Q 3/26, H04B 7/185, H04B 17/12

(54) **PROCÉDÉ DE DÉTERMINATION D'UN BIAIS DE PHASE DANS LE SIGNAL TRANSMIS PAR AU MOINS UN DES ÉLÉMENTS RAYONNANTS (ER) D'UNE ANTENNE ACTIVE (ANT) ET DISPOSITIF ASSOCIÉ**
VERFAHREN ZUR BESTIMMUNG EINER PHASENVERZERRUNG IN DEM SIGNAL, DAS VON MINDESTENS EINEM DER STRAHLUNGSELEMENTE EINER AKTIVEN ANTENNE (ANT) ÜBERTRAGEN WIRD, UND ENTSPRECHENDE VORRICHTUNG
METHOD FOR DETERMINING A PHASE BIAS IN THE SIGNAL TRANSMITTED BY AT LEAST ONE RADIATING ELEMENT (RE) OF AN ACTIVE ANTENNA (ANT) AND ASSOCIATED DEVICE

(30) Priorité: 16.10.2017 FR 1701074
(43) Date de publication de la demande: 17.04.2019
(73) Titulaire: Thales, 92400 Courbevoie (FR); Centre National d'Etudes Spatiales, 75001 Paris (FR)
(72) Inventeur: CALMETTES, Thibaud, 31100 TOULOUSE (FR); VAUTHERIN, Benoît, 31100 TOULOUSE (FR); GREGOIRE, Yoan, 31401 TOULOUSE Cedex 9 (FR); ILIOPOULOS, Christelle, 31401 TOULOUSE Cedex 9 (FR)
(74) Mandataire: Brunelli, Gérald

(56) Documents cités:
- EP-A1- 3 185 032

## Description

L'invention porte sur la maîtrise de l'émission de signaux en séparation spatiale ou multiplexage spatial, d'acronyme SDMA pour "Space-Division Multiple Access" en langue anglaise, depuis une antenne active au sol vers l'espace.

Une difficulté est la forte maîtrise des distorsions de phase et d'amplitude des antennes et chaînes RF dans un fonctionnement sensiblement "en boucle ouverte", car à part la perte du signal en réception au niveau des satellites, il n'y a pas vraiment de moyen de surveiller la qualité du signal émis, et lorsque la perte survient on ne sait pas a priori dire quel élément rayonnant de l'antenne est défaillant.

Ces problématiques sont particulièrement prégnantes pour les stations au sol, car l'antenne étant en ciel ouvert, les effets de température peuvent jouer sur la maîtrise des diagrammes de rayonnement, et dans le contexte d'accès multiple SDMA (et non comme d'ordinaire d'accès TDMA avec formation de faisceaux à chaque fois) puisque l'ensemble des signaux sont alors émis en même temps. Enfin, la maîtrise du diagramme de rayonnement doit se faire jusqu'à faible élévation, ce qui en demande une grande maîtrise.

Pour gérer cela, il est connu de mesurer dans un environnement maîtrisé et en laboratoire, en chambre anéchoïde, les diagrammes de rayonnement des éléments rayonnants de l'antenne active, avant son déploiement.

La première difficulté est de rendre les tests en chambre anéchoïde représentatifs, surtout pour des antennes actives munies d'un grand nombre d'éléments rayonnants, typiquement supérieur à 20, qui demandent donc de très grandes chambres anéchoïdes, et notamment pour y prendre en compte des effets de pression et de température.

Ces solutions ont un coût élevé, à la fois pour l'utilisation d'une chambre anéchoïde, mais également pour le choix de technologies assez peu sensibles (à la température par exemple) pour faciliter cette calibration.

EP3185032A1 divulgue un groupe d'antennes en communication avec un groupe de satellites en beamforming. L'émetteur est en mesure de calculer pour chaque satellite, le décalage en phase à appliquer.

Un but de l'invention est de pallier les problèmes précédemment cités.

Aussi, il est proposé, selon un aspect de l'invention, un procédé de détermination d'un biais de phase dans le signal transmis par au moins un des éléments rayonnants d'une antenne active au sol émettant vers l'espace des signaux par méthode d'accès multiple à répartition spatiale SDMA, le procédé comprenant les étapes consistant à :
- effectuer une formation de faisceau par combinaison déphasée des signaux émis par les éléments rayonnants dans la direction de chaque satellite d'un ensemble de satellites ;
- réaliser, de manière itérative, sur un intervalle de temps les étapes consistant à :
   - effectuer une formation de faisceau dans la direction de de chaque récepteur de référence, d'un ensemble de récepteurs de référence comprenant entre trois et dix récepteurs de référence au sol autour de l'antenne active, en utilisant un sous-ensemble d'au moins trois éléments rayonnants des éléments rayonnants de l'antenne active ;
   - comparer à un seuil, pour chaque récepteur de référence, l'écart entre la valeur d'une mesure de la puissance reçue par chaque récepteur de référence et la somme, sur les éléments rayonnants du sous-ensemble effectuant une formation de faisceau dans la direction du récepteur de référence, des différences entre la puissance isotrope rayonnée équivalente dans la direction du récepteur de référence et la perte d'espace libre de chaque élément rayonnant du sous-ensemble ;
   - détecter un biais de phase pour un élément rayonnant (ER) du sous-ensemble pointant un récepteur de référence (RR) correspondant, lorsqu'un écart est supérieur au seuil; et
   - modifier les sous-ensembles d'éléments rayonnants pointant sur les récepteurs de référence, lorsqu'un biais de phase est détecté, tant que l'élément rayonnant ayant un biais de phase n'est pas déterminé.

Cette modification consistant à modifier (E5) les sous-ensembles d'éléments rayonnants (ER) effectuant respectivement des formations de faisceau dans les directions des récepteurs de référence (RR) de sorte que les éléments rayonnants du sous-ensemble dans lequel le biais de phase est détecté soient répartis sur au moins deux sous-ensembles modifiés.

Un tel procédé, permet à coût réduit et en temps réel, de déterminer itérativement la présence d'un biais de phase dans le signal transmis par au moins un des éléments rayonnants d'une antenne active au sol émettant vers l'espace des signaux par méthode d'accès multiple à répartition spatiale SDMA.

Ainsi, il est possible de déterminer, selon le nouveau sous-ensemble dans lequel la puissance est également dégradée, à quel sous-ensemble initial appartenait l'élément antennaire défaillant, et ainsi par dichotomie converger jusqu'à l'identification de manière unique de l'élément antennaire défaillant.

Dans un mode de mise en œuvre, la modification des sous-ensembles d'éléments rayonnants effectuant respectivement des formations de faisceau dans les directions des récepteurs de référence est réalisée de sorte que les éléments rayonnants du sous-ensemble dans lequel le biais de phase est détecté soient répartis sur au moins deux sous-ensembles modifiés effectuant respectivement des formations de faisceau dans les directions de récepteurs de référence différent du récepteur de référence pour lequel a été détecté un biais de phase d'un élément rayonnant.

Ainsi, le cas d'un problème sur un récepteur de référence et non sur un élément rayonnant d'antenne peut être détecté également.

Selon un mode de mise en œuvre, on équi-répartit spatialement les récepteurs de référence autour de l'antenne active.

Ainsi, une grande variété du domaine d'azimut des éléments rayonnants est couverte, ce qui permet de détecter une éventuelle dégradation dans un sous-domaine particulier d'azimut.

Dans un mode de mise en œuvre, les récepteurs de référence sont disposés par rapport au plan moyen de l'antenne active de sorte que leur angle d'élévation soit égal à un seuil d'élévation minimum à partir duquel l'antenne doit pouvoir communiquer avec les satellites, et à une distance de l'antenne supérieure à dix fois la longueur d'onde maximale de communication avec les satellites.

Ainsi, les phases sont surveillées à l'endroit où elles sont le plus susceptibles de varier (à faible élévation), et en même temps il est évité de mettre des récepteurs de référence au-dessus de l'horizon de communication avec les satellites où elles pourraient gêner la transmission des signaux utiles.

Selon un mode de mise en œuvre, le nombre d'éléments rayonnants de l'antenne active est supérieur à la somme du nombre de satellites et du nombre maximum de récepteurs de référence dans les directions desquels des formations de faisceau sont effectués simultanément par un même élément d'antenne.

Ainsi, la formation de faisceau en direction des récepteurs de référence en addition du pointage vers les satellites est permis par les degrés de liberté de la formation de faisceaux pour le SDMA.

Dans un mode de mise en œuvre, le nombre d'éléments rayonnants de l'antenne active est supérieur à 1,3 fois la somme du nombre de satellites et du nombre maximum de récepteurs de référence dans les directions desquels des formations de faisceau sont effectués simultanément par un même élément d'antenne.

Ceci permet de disposer d'une marge supplémentaire de 30% des degrés de libertés afin de pouvoir rajouter des contraintes de gain supplémentaires si nécessaire à la formation de faisceaux (élimination d'obstacles au sol, maîtrise de lobes secondaires de réseau). Ainsi, on dispose d'une marge significative pour lesdits pointages, ce qui peut permettre de plus d'améliorer la formation de faisceau, par exemple en évitant des pointages des lobes secondaires de réseau dans des directions non voulues.

Selon un mode de mise en œuvre, lorsqu'un biais de phase est détecté sur un élément rayonnant, la valeur dudit biais de phase est modifiée de manière incrémentale, jusqu'à identifier la valeur de biais de phase à soustraire audit élément rayonnant pour retrouver toute la puissance voulue sur le récepteur de référence.

Il est également proposé, selon un autre aspect de l'invention un système de détermination d'un biais de phase dans le signal transmis par au moins un des éléments rayonnants d'une antenne active au sol émettant vers l'espace des signaux par méthode d'accès multiple à répartition spatiale SDMA, comprenant au moins trois récepteurs de référence disposés par rapport au plan moyen de l'antenne active de sorte que leur angle d'élévation soit égal à un seuil d'élévation minimum à partir duquel l'antenne doit pouvoir communiquer avec les satellites, et à une distance de l'antenne supérieure à dix fois la longueur d'onde maximale de communication avec les satellites et comprenant une unité de commande électronique adaptée pour mettre en œuvre le procédé tel que décrit précédemment.

Dans un mode de réalisation, les récepteurs de référence sont équi-répartis spatialement autour de l'antenne active.

L'invention sera mieux comprise à l'étude de quelques modes de réalisation décrits à titre d'exemples nullement limitatifs et illustrés par les dessins annexés sur lesquels :

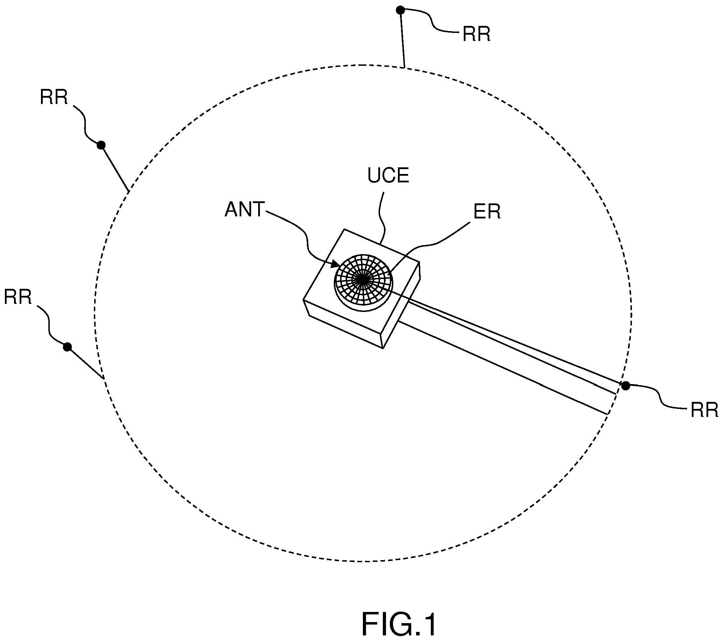

- la figure 1 illustre schématiquement un système de détermination d'un biais de phase dans le signal transmis par au moins un des éléments rayonnants d'une antenne active au sol émettant vers l'espace des signaux par méthode d'accès multiple à répartition spatiale SDMA selon un aspect de l'invention ; et

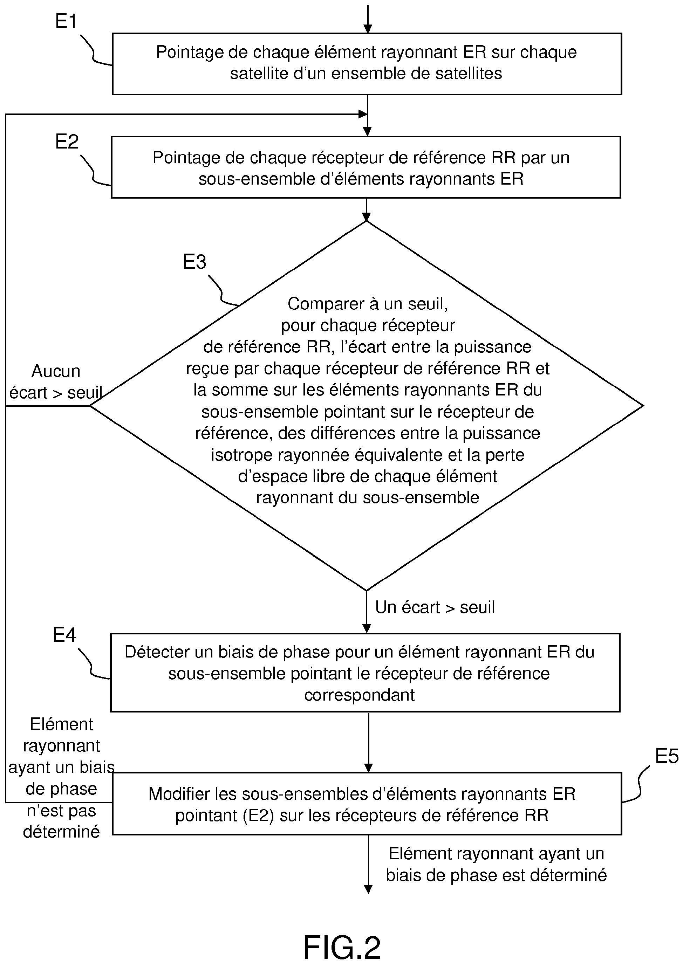

- la figure 2 illustre schématiquement un procédé de détermination d'un biais de phase dans le signal transmis par au moins un des éléments rayonnants d'une antenne active au sol émettant vers l'espace des signaux par méthode d'accès multiple à répartition spatiale SDMA selon un aspect de l'invention.

Sur les différentes figures, les éléments ayant des références identiques sont identiques.

Par commodité usuelle de langage, on utilisera le terme "pointer" (un satellite ou un récepteur) pour signifier "former un faisceau par combinaison déphasée des signaux émis dans la direction de". Cela revient en effet à "pointer" physiquement une antenne parabolique mobile, en focalisant le gain maximal dans cette direction.

La figure 1 représente un système de détermination d'un biais de phase dans le signal transmis par au moins un des éléments rayonnants ER d'une antenne active ANT au sol émettant vers l'espace des signaux par méthode d'accès multiple à répartition spatiale SDMA, à destination d'un ensemble de satellites.

Le système comprend au moins trois récepteurs de référence RR disposés par rapport au plan moyen de l'antenne active ANT de sorte que leur angle d'élévation soit égal à un seuil d'élévation minimum à partir duquel l'antenne doit pouvoir communiquer avec les satellites, et à une distance de l'antenne supérieure à dix fois la longueur d'onde maximale de communication avec les satellites.

Le nombre N d'éléments rayonnants ER de l'antenne active ANT est supérieur à la somme du nombre de satellites M et du nombre maximum de récepteurs de référence RR pointés simultanément par un même élément d'antenne.

Le nombre N d'éléments rayonnants ER de l'antenne active ANT est, de manière préférentielle, supérieur à la 1,3 fois la somme du nombre de satellites M et du nombre maximum de récepteurs de référence RR pointés simultanément par un même élément d'antenne. Cela permet de conserver des degrés de liberté suffisants pour améliorer si besoin la qualité du pointage SDMA (retrait de lobes secondaires de réseau, ajout de directions de pointage non souhaitées supplémentaires, ...).

Le système comprend en outre une unité de commande électronique UCE adaptée pour mettre en œuvre le procédé de l'invention.

Les récepteurs de référence RR échangent des données avec l'unité de commande électronique UCE par liaison avec ou sans fil.

Le nombre de récepteurs de référence RR est compris entre 3et 10, de manière à maximiser la détermination du biais de phase dans le signal transmis par au moins un des éléments rayonnants ER, tout en limitant le coût et la complexité augmentant avec le nombre de récepteurs de référence RR. En l'espèce, la figure 1 décrit un mode de réalisation utilisant 4 récepteurs de référence RR, ce qui est un bon compromis.

Par exemple, l'angle d'élévation des récepteurs de référence RR est de 5°.

En variante, les récepteurs de référence RR peuvent être équi-répartis autour de l'antenne ANT, pour s'assurer d'une bonne calibration dans un grand domaine d'azimuts.

La figure 2 représente un procédé de détermination d'un biais de phase dans le signal transmis par au moins un des éléments rayonnants ER d'une antenne active ANT au sol émettant vers l'espace des signaux par méthode d'accès multiple à répartition spatiale SDMA. Le procédé comprend les étapes consistant à :
- effectuer un pointage E1 de chaque élément rayonnant ER sur chaque satellite d'un ensemble de satellites ;
- réaliser, de manière itérative, sur un intervalle de temps Δt les étapes consistant à :
   - effectuer un pointage E2 de chaque récepteur de référence RR, d'un ensemble de récepteurs de référence comprenant entre trois et dix récepteurs de référence au sol autour de l'antenne active ANT, par un sous-ensemble d'au moins trois éléments rayonnants ER des éléments rayonnants ER de l'antenne active ANT ;
   - comparer à un seuil, pour chaque récepteur de référence RR, l'écart entre la valeur d'une mesure de la puissance reçue par chaque récepteur de référence RR et la somme, sur les éléments rayonnants ER du sous-ensemble pointant sur le récepteur de référence RR, des différences entre la puissance isotrope rayonnée équivalente et la perte d'espace libre de chaque élément rayonnant du sous-ensemble ;
   - détecter un biais de phase, lorsqu'un écart est supérieur au seuil, pour un élément rayonnant du sous-ensemble pointant le récepteur de référence RR ; et
   - modifier les sous-ensembles d'éléments rayonnants ER pointant E2 sur les récepteurs de référence RR, lorsqu'un biais de phase est détecté, tant que l'élément rayonnant ayant un biais de phase n'est pas déterminé.

Les sous-ensembles d'éléments rayonnants ER peuvent être disjoints, et leur union peut ou non être égale à l'ensemble des éléments rayonnants ER.

De manière régulière ou périodique, les récepteurs de référence RR sont respectivement pointés par des sous-ensembles d'éléments rayonnants ER, comme s'ils étaient des satellites supplémentaires. Ces modifications de sous-ensembles d'éléments rayonnants ER peuvent utiliser des permutations déterministes ou adapter le pointage des sous-ensembles d'éléments rayonnants ER à la détermination d'un biais de phase sur au moins un élément rayonnant ER d'un sous-ensemble avec une approche par éliminations successives.

Ainsi, lorsqu'un biais de phase est détecté pour un élément rayonnant d'un sous-ensemble d'éléments rayonnants, on modifie E5 les sous-ensembles d'éléments rayonnants respectivement pointés sur les récepteurs de référence RR de sorte que les éléments rayonnants du sous-ensemble dans lequel le biais de phase est détecté soient répartis sur au moins deux sous-ensembles modifiés.

L'exemple qui suit utilise, par exemple, une antenne ANT à 64 éléments rayonnants ER, deux satellites, et 4 récepteurs de référence RR :
A la date t₁ :
   - Les 64 éléments rayonnants pour pointer le satellite 1
   - Les 64 éléments rayonnants pour pointer le satellite 2
   - Les éléments rayonnants 01 à 16 pour pointer le récepteur de référence 1
   - Les éléments rayonnants 17 à 32 pour pointer le récepteur de référence 2
   - Les éléments rayonnants 33 à 48 pour pointer le récepteur de référence 3
   - Les éléments rayonnants 49 à 64 pour pointer le récepteur de référence 4
   - Dégradation vers le récepteur de référence 2 (restent les éléments rayonnants 17 à 32)
A la date t₂ :
   - Les 64 éléments rayonnants pour pointer le satellite 1
   - Les 64 éléments rayonnants pour pointer le satellite 2
   - Les éléments rayonnants 09 à 24 pour pointer le récepteur de référence 1
   - Les éléments rayonnants 25 à 50 pour pointer le récepteur de référence 2
   - Les éléments rayonnants 41 à 56 pour pointer le récepteur de référence 3
   - Les éléments rayonnants 57 à 64 et 01 à 08 pour pointer le récepteur de référence 4
   - Dégradation vers le récepteur de référence 1 (restent les éléments rayonnants 17 à 24)
A la date t₃ :
   - Les 64 éléments rayonnants pour pointer le satellite 1
   - Les 64 éléments rayonnants pour pointer le satellite 2
   - Les éléments rayonnants 09 à 12, 24 à 28, 41 à 44, 57 à 60 pour pointer le récepteur de référence 1
   - Les éléments rayonnants 05 à 08, 21 à 23, 37 à 40, 53 à 56 pour pointer le récepteur de référence 2
   - Les éléments rayonnants 01 à 04, 17 à 20, 33 à 36, 49 à 52 pour pointer le récepteur de référence 3
   - Les éléments rayonnants 13 à 16, 29 à 32, 45 à 48, 61 à 64 pour pointer le récepteur de référence 4
   - Dégradation vers le récepteur de référence 3 (restent les éléments rayonnants 17 à 20)
A la date t₄ :
   - Les 64 éléments rayonnants pour pointer le satellite 1
   - Les 64 éléments rayonnants pour pointer le satellite 2
   - Les éléments rayonnants 01, 02, 09, 10, 17, 18, 25, 26, 33, 34, 41, 42, 49, 50, 57, 58 pour pointer le récepteur de référence 1
   - Les éléments rayonnants 03, 04, 11, 12, 19, 20, 27, 28, 35, 36, 43, 44, 51, 52, 59, 60 pour pointer le récepteur de référence 2
   - Les éléments rayonnants 05, 06, 13, 14, 21, 22, 29, 30, 37, 38, 45, 46, 53, 54, 61, 62 pour pointer le récepteur de référence 3
   - Les éléments rayonnants 07, 08, 15, 16, 23, 24, 31, 32, 39, 40, 47, 48, 55, 56, 63, 64 pour pointer le récepteur de référence 4
   - Dégradation vers le récepteur de référence 2 (restent les éléments rayonnants 19 et 20)
A la date t₅ :
   - Les 64 éléments rayonnants pour pointer le satellite 1
   - Les 64 éléments rayonnants pour pointer le satellite 2
   - Les éléments rayonnants 03, 07, 11, 15, 19, 23, 27, 31, 35, 39, 43, 47, 51, 55, 59, 63 pour pointer le récepteur de référence 1
   - Les éléments rayonnants 01, 05, 09, 13, 17, 21, 25, 29, 33, 37, 41, 45, 49, 53, 57, 61 pour pointer le récepteur de référence 2
   - Les éléments rayonnants 02, 06, 10, 14, 18, 22, 26, 30, 34, 38, 42, 46, 50, 54, 58, 62 pour pointer le récepteur de référence 3
   - Les éléments rayonnants 04, 08, 12, 16, 20, 24, 28, 32, 36, 40, 44, 48, 52, 56, 60, 64 pour pointer le récepteur de référence 4
   - Dégradation vers le récepteur de référence 4 (reste l'élément rayonnant 20)

Ainsi il est identifié un biais de phase dans le signal transmis par l'élément rayonnant ER référencé 20.

Une autre implémentation avantageuse peut consister à minimiser les différences, comme suit :
A la date t₁ :
   - Les 64 éléments rayonnants pour pointer le satellite 1
   - Les 64 éléments rayonnants pour pointer le satellite 2
   - Les éléments rayonnants 01 à 16 pour pointer le récepteur de référence 1
   - Les éléments rayonnants 02 à 17 pour pointer le récepteur de référence 2
   - Les éléments rayonnants 03 à 18 pour pointer le récepteur de référence 3
   - Les éléments rayonnants 04 à 19 pour pointer le récepteur de référence 4
A la date t₂ (par exemple 2 secondes plus tard) :
   - Les 64 éléments rayonnants pour pointer le satellite 1
   - Les 64 éléments rayonnants pour pointer le satellite 2
   - Les éléments rayonnants 05 à 20 pour pointer le récepteur de référence 4
   - Les éléments rayonnants 06 à 21 pour pointer le récepteur de référence 3
   - Les éléments rayonnants 07 à 22 pour pointer le récepteur de référence de2
   - Les éléments rayonnants 08 à 23 pour pointer le récepteur de référence 1
A la date t₃ (par exemple 2 secondes plus tard) :
   - Les 64 éléments rayonnants pour pointer le satellite 1
   - Les 64 éléments rayonnants pour pointer le satellite 2
   - Les éléments rayonnants 09 à 24 pour pointer le récepteur de référence 1
   - Les éléments rayonnants 10 à 25 pour pointer le récepteur de référence 2
   - Les éléments rayonnants 11 à 26 pour pointer le récepteur de référence 3
   - Les éléments rayonnants 12 à 27 pour pointer le récepteur de référence 4
A la date t₄ (par exemple 2 secondes plus tard) :
   - Les 64 éléments rayonnants pour pointer le satellite 1
   - Les 64 éléments rayonnants pour pointer le satellite 2
   - Les éléments rayonnants 13 à 28 pour pointer le récepteur de référence 4
   - Les éléments rayonnants 14 à 29 pour pointer le récepteur de référence 2
   - Les éléments rayonnants 15 à 30 pour pointer le récepteur de référence 3
   - Les éléments rayonnants 16 à 31 pour pointer le récepteur de référence 1
A la date t₅ (par exemple 2 secondes plus tard) :
   - Les 64 éléments rayonnants pour pointer le satellite 1
   - Les 64 éléments rayonnants pour pointer le satellite 2
   - Les éléments rayonnants 17 à 32 pour pointer le récepteur de référence 1
   - Les éléments rayonnants 18 à 33 pour pointer le récepteur de référence 3
   - Les éléments rayonnants 19 à 34 pour pointer le récepteur de référence 2
   - Les éléments rayonnants 20 à 35 pour pointer le récepteur de référence 4

Dans cet exemple, une dégradation sur les références 3 et 4 entre t₁ et t₂, puis sur toutes les références entre t₂ et t₅, puis sur les références 1 et 3 après t₅, permet d'identifier une dégradation sur l'élément rayonnant 18.

Quelle que soit la permutation choisie, on sélectionne en particulier la taille des sous-ensembles d'éléments rayonnants ER, les temps passés par observation, et les modifications E5 de sous-ensembles de en fonction des caractéristiques que l'on veut observer.

La modification E5 est ainsi dimensionnée par :
- les niveaux de finesse de puissance nécessaires : une dégradation de 1/16ème des antennes utilisées par le sous-réseau se traduit par une dégradation de 10.log(15/16)=-0.28 dB, et demande donc un temps d'observation suffisamment long pour permettre une mesure de puissance plus précise. Il faut ainsi éviter d'utiliser toutes les éléments rayonnants ER car alors la détection de la panne d'un seul devient difficile et longue ;
- le nombre d'éléments rayonnants ER nécessaires pour un pointage homogène : pour éviter une variation de puissance en fonction des sous-ensembles utilisés, il faut assez d'éléments pour s'assurer que la puissance reçue reste la même, ou en tout cas qu'elle est assez maîtrisée pour pouvoir continuer à observer des distorsions. Une taille de sous-ensembles de 7 éléments rayonnants est donc un minimum.

Il est intéressant de varier les pointages vers les récepteurs de référence RR utilisés par les sous-ensembles d'éléments rayonnants pour s'assurer que les effets de dégradation sont bien observables sur toutes les références, et non dépendants de celle-ci.

Ce qui compte, c'est de ne pas aller jusqu'à décider l'antenne à corriger sans avoir exclu l'hypothèse que cela vienne d'un récepteur de référence RR. Ainsi, des dégradations observées sur le même récepteur de référence RR à chaque étape ne correspondent plus à aucun élément rayonnant ER de l'antenne ANT. Par exemple, si on suppose une dégradation à chaque étape sur la référence 1, cela donne :
A la date t₁ :
   - Les 64 éléments rayonnants pour pointer le satellite 1
   - Les 64 éléments rayonnants pour pointer le satellite 2
   - Les éléments rayonnants 01 à 16 pour pointer le récepteur de référence 1
   - Les éléments rayonnants 17 à 32 pour pointer le récepteur de référence 2
   - Les éléments rayonnants 33 à 48 pour pointer le récepteur de référence 3
   - Les éléments rayonnants 49 à 64 pour pointer le récepteur de référence 4
   - Dégradation vers le récepteur de référence 1 (restent les éléments 01 à 16, ou le récepteur de référence 1)
A la date t₂ :
   - Les 64 éléments rayonnants pour pointer le satellite 1
   - Les 64 éléments rayonnants pour pointer le satellite 2
   - Les éléments rayonnants 09 à 24 pour pointer le récepteur de référence 1
   - Les éléments rayonnants 25 à 50 pour pointer le récepteur de référence 2
   - Les éléments rayonnants 41 à 56 pour pointer le récepteur de référence 3
   - Les éléments rayonnants 57 à 64 et 01 à 08 pour pointer le récepteur de référence 4
   - Dégradation vers le récepteur de référence 1 (restent les éléments rayonnants 09 à 16, ou le récepteur de référence 1)
A la date t₃ :
   - Les 64 éléments rayonnants pour pointer le satellite 1
   - Les 64 éléments rayonnants pour pointer le satellite 2
   - Les éléments rayonnants 09 à 12, 24 à 28, 41 à 44, 57 à 60 pour pointer le récepteur de référence 1
   - Les éléments rayonnants 05 à 08, 21 à 23, 37 à 40, 53 à 56 pour pointer le récepteur de référence 2
   - Les éléments rayonnants 01 à 04, 17 à 20, 33 à 36, 49 à 52 pour pointer le récepteur de référence 3
   - Les éléments rayonnants 13 à 16, 29 à 32, 45 à 48, 61 à 64 pour pointer le récepteur de référence 4
   - Dégradation vers le récepteur de référence 1 (restent les éléments rayonnants 09 à 12, ou le récepteur de référence 1)
A la date t₄ :
   - Les 64 éléments rayonnants pour pointer le satellite 1
   - Les 64 éléments rayonnants pour pointer le satellite 2
   - Les éléments rayonnants 01, 02, 09, 10, 17, 18, 25, 26, 33, 34, 41, 42, 49, 50, 57, 58 pour pointer le récepteur de référence 1
   - Les éléments rayonnants 03, 04, 11, 12, 19, 20, 27, 28, 35, 36, 43, 44, 51, 52, 59, 60 pour pointer le récepteur de référence 2
   - Les éléments rayonnants 05, 06, 13, 14, 21, 22, 29, 30, 37, 38, 45, 46, 53, 54, 61, 62 pour pointer le récepteur de référence 3
   - Les éléments rayonnants 07, 08, 15, 16, 23, 24, 31, 32, 39, 40, 47, 48, 55, 56, 63, 64 pour pointer le récepteur de référence 4
   - Dégradation vers le récepteur de référence 1 (restent les éléments rayonnants 09 et 10, ou le récepteur de référence 1)
A la date t₅ :
   - Les 64 éléments rayonnants pour pointer le satellite 1
   - Les 64 éléments rayonnants pour pointer le satellite 2
   - Les éléments 03, 07, 11, 15, 19, 23, 27, 31, 35, 39, 43, 47, 51, 55, 59, 63 pour pointer le récepteur de référence 1
   - Les éléments rayonnants 01, 05, 09, 13, 17, 21, 25, 29, 33, 37, 41, 45, 49, 53, 57, 61 pour pointer le récepteur de référence 2
   - Les éléments rayonnants 02, 06, 10, 14, 18, 22, 26, 30, 34, 38, 42, 46, 50, 54, 58, 64 pour pointer le récepteur de référence 3
   - Les éléments rayonnants 04, 08, 12, 16, 20, 24, 28, 32, 36, 40, 44, 48, 52, 56, 60, 62 pour pointer le récepteur de référence 4
   - Dégradation vers le récepteur de référence 1 (il s'agit donc d'un problème sur le récepteur de référence 1 car plus aucune antenne commune)

Lorsqu'une panne d'un élément rayonnant ER de l'antenne ANT est détectée, la stratégie la plus évidente est de le couper ou déconnecter, simplement pour éviter la dégradation de la formation de faisceaux vers les satellites. En effet, des éléments rayonnants ER coupés dégradent la puissance d'émission, à proportion du nombre d'éléments rayonnants coupés. Par exemple, si on utilise 63 éléments au lieu de 64, on perd 10*log(63/64) = -0.07 dB, ce qui peut être tout à fait acceptable au niveau bilan de liaison. En autorisant des périodes de maintenance régulière, il est possible de tolérer de perdre un certain nombre d'éléments rayonnants avant d'en changer plusieurs d'un coup.

Une stratégie à privilégier peut être de faire varier artificiellement le biais de phase (et éventuellement l'amplitude) de l'élément rayonnant de manière arbitraire, par exemple par pas de 1°, jusqu'à faire disparaître les dégradations dans les sous-ensembles d'éléments rayonnants qui l'utilisent. Ce biais de phase appliqué arbitrairement est alors conservé pour tous les usages de cette antenne, notamment lors du pointage vers les satellites. Le niveau de dégradation sur la totalité des éléments rayonnants ER d'une seule antenne étant faible, on dispose d'un peu de temps pour réaliser ce recalage (typiquement jusqu'à la panne suivante), et on dispose donc d'un moyen d'auto-correction automatique efficace, toujours en utilisant la même technique de surveillance sur les récepteurs de référence par permutation de sous-ensembles d'éléments rayonnants.

La modification E5 des sous-ensembles d'éléments rayonnants respectivement pointés sur les récepteurs de référence RR peut être réalisée de sorte que les éléments rayonnants ER du sous-ensemble dans lequel le biais de phase est détecté soient répartis sur au moins deux sous-ensembles modifiés pointant respectivement sur des récepteurs de référence RR différent du récepteur de référence RR pour lequel a été détecté un biais de phase d'un élément rayonnant.

L'avantage principal de la présente invention est qu'elle permet de répondre à la problématique de calibration à moindre coût, notamment en termes de maintenance (uniquement des éléments fixes RR et RE). Elle est très flexible, puisque grâce aux sous-ensembles, aux durées entre les modifications de sous-ensembles et les permutations elles-mêmes, on peut sélectionner le niveau d'observabilité souhaité. La méthode d'auto-correction exposée plus haut est aussi un avantage intéressant. De manière corollaire, la réception par les éléments de référence peut aussi servir pour la vérification de la qualité du signal émis, et pas seulement du pointage par le SDMA, et donc offrir un monitoring continu du pointage. Enfin, il est important de noter que la solution ne demande pas de modification au niveau du satellite qui peut se comporter comme si l'émission sol était depuis une parabole.

## Revendications

1. Procédé de détermination d'un biais de phase dans le signal transmis par au moins un des éléments rayonnants (ER) d'une antenne active (ANT) au sol émettant vers l'espace des signaux par méthode d'accès multiple à répartition spatiale SDMA, le procédé comprenant les étapes consistant à :
- effectuer une formation de faisceau (E1) par combinaison déphasée des signaux émis par les éléments rayonnants (ER) dans la direction de chaque satellite d'un ensemble de satellites ;
- réaliser, de manière itérative, sur un intervalle de temps (Δt) les étapes consistant à :
• effectuer une formation de faisceau (E2) dans la direction de chaque récepteur de référence (RR) d'un ensemble de récepteurs de référence comprenant entre trois et dix récepteurs de référence au sol autour de l'antenne active (ANT), en utilisant un sous-ensemble d'au moins trois éléments rayonnants (ER) des éléments rayonnants (ER) de l'antenne active (ANT) ;
• comparer (E3) à un seuil, pour chaque récepteur de référence (RR), l'écart entre la valeur d'une mesure de la puissance reçue par chaque récepteur de référence (RR) et la somme, sur les éléments rayonnants (ER) du sous-ensemble effectuant une formation de faisceau dans la direction du récepteur de référence (RR), des différences entre la puissance isotrope rayonnée équivalente dans la direction du récepteur de référence et la perte d'espace libre de chaque élément rayonnant du sous-ensemble ;
• détecter (E4) un biais de phase pour un élément rayonnant (ER) du sous-ensemble pointant un récepteur de référence (RR) correspondant, lorsqu'un écart est supérieur au seuil; et
• modifier (E5) les sous-ensembles d'éléments rayonnants (ER) pointant (E2) sur les récepteurs de référence (RR), lorsqu'un biais de phase est détecté, tant que l'élément rayonnant ayant un biais de phase n'est pas déterminé,
cette modification consistant à modifier (E5) les sous-ensembles d'éléments rayonnants (ER) effectuant respectivement des formations de faisceau dans les directions des récepteurs de référence (RR) de sorte que les éléments rayonnants du sous-ensemble dans lequel le biais de phase est détecté soient répartis sur au moins deux sous-ensembles modifiés.

2. Procédé selon la revendication 1, dans lequel, la modification (E5) des sous-ensembles d'éléments rayonnants effectuant respectivement des formations de faisceau dans les directions des récepteurs de référence (RR) est réalisée de sorte que les éléments rayonnants du sous-ensemble dans lequel le biais de phase est détecté soient répartis sur au moins deux sous-ensembles modifiés effectuant respectivement des formations de faisceau dans les directions de récepteurs de référence (RR) différents du récepteur de référence (RR) pour lequel a été détecté un biais de phase d'un élément rayonnant.

3. Procédé selon l'une des revendications précédentes, dans lequel on équi-répartit spatialement les récepteurs de référence (RR) autour de l'antenne active (ANT).

4. Procédé selon l'une des revendications précédentes, dans lequel les récepteurs de référence (RR) sont disposés par rapport au plan moyen de l'antenne active (ANT) de sorte que leur angle d'élévation soit égal à un seuil d'élévation minimum à partir duquel l'antenne doit pouvoir communiquer avec les satellites, et à une distance de l'antenne supérieure à dix fois la longueur d'onde maximale de communication avec les satellites.

5. Procédé selon l'une des revendications précédentes, dans lequel le nombre (N) d'éléments rayonnants (ER) de l'antenne active (ANT) est supérieur à la somme du nombre de satellites (M) et du nombre maximum de récepteurs de référence (RR) dans les directions desquels des formations de faisceau sont effectués simultanément par un même élément d'antenne.

6. Procédé selon la revendication 5, dans lequel le nombre (N) d'éléments rayonnants (ER) de l'antenne active (ANT) est supérieur à 1,3 fois la somme du nombre de satellites (M) et du nombre maximum de récepteurs de référence (RR) dans les directions desquels des formations de faisceau sont effectués simultanément par un même élément d'antenne.

7. Procédé selon l'une des revendications précédentes, dans lequel, lorsqu'un biais de phase est détecté sur un élément rayonnant, la valeur dudit biais de phase est modifiée de manière incrémentale, jusqu'à identifier la valeur de biais de phase à soustraire audit élément rayonnant pour retrouver toute la puissance voulue sur le récepteur de référence.

8. Système de détermination d'un biais de phase dans le signal transmis par au moins un des éléments rayonnants (ER) d'une antenne active (ANT) au sol émettant vers l'espace des signaux par méthode d'accès multiple à répartition spatiale SDMA, comprenant au moins trois récepteurs de référence (RR) disposés par rapport au plan moyen de l'antenne active (ANT) de sorte que leur angle d'élévation soit égal à un seuil d'élévation minimum à partir duquel l'antenne doit pouvoir communiquer avec des satellites, et à une distance de l'antenne supérieure à dix fois la longueur d'onde maximale de communication avec les satellites et comprenant une unité de commande électronique (UCE) adaptée pour mettre en œuvre le procédé selon l'une des revendications précédentes.

9. Système selon la revendication 8, dans lequel les récepteurs de référence (RR) sont équi-répartis spatialement autour de l'antenne active (ANT).

## Patentansprüche

1. Verfahren zum Bestimmen einer Phasenverzerrung in dem Signal, das von wenigstens einem der Abstrahlelemente (ER) einer aktiven Antenne (ANT) am Boden übertragen wird, die Signale mit dem räumlichen Vielfachzugriffsverfahren SDMA in den Raum aussendet, wobei das Verfahren die folgenden Schritte beinhaltet:
- Bewirken einer Strahlformung (E1) durch phasenverschobenes Kombinieren von Signalen, die von den Abstrahlelementen (ER) in der Richtung jedes Satelliten einer Gruppe von Satelliten ausgesendet werden;
- Durchführen der folgenden Schritte auf iterative Weise in einem Zeitintervall (Δt):
• Bewirken einer Strahlformung (E2) in der Richtung jedes Referenzempfängers (RR) einer Gruppe von Referenzempfängern, die drei bis zehn Referenzempfänger am Boden um die aktive Antenne (ANT) umfasst, unter Nutzung eines Teilsatzes von wenigstens drei Abstrahlelementen (ER) der Abstrahlelemente (ER) der aktiven Antenne (ANT);
• Vergleichen (E3) der Abweichung zwischen dem Wert eines Maßes für die von jedem Referenzempfänger (RR) empfangene Leistung und der Summe, auf den Abstrahlelementen (ER) des Teilsatzes, der eine Strahlformung in der Richtung des Referenzempfängers (RR) durchführt, von Differenzen zwischen der äquivalenten abgestrahlten isotropen Leistung in der Richtung des Referenzempfängers und dem Verlust im freien Raum jedes Abstrahlelements des Teilsatzes, mit einem Schwellenwert für jeden Referenzempfänger (RR);
• Erkennen (E4) einer Phasenverzerrung für ein Abstrahlelement (ER) des Teilsatzes, das auf einen entsprechenden Referenzempfänger (RR) zeigt, wenn eine Abweichung größer ist als der Schwellenwert; und
• Modifizieren (E5) der Teilsätze von Abstrahlelementen (ER), die auf die Referenzempfänger (RR) zeigen (E2), wenn eine Phasenverzerrung erkannt wird, sofern das Abstrahlelement mit einer Phasenverzerrung nicht bestimmt wurde,
wobei das Modifizieren (E5) der Teilsätze von Abstrahlelementen (ER), die auf die Referenzempfänger (RR) zeigen (E2), Folgendes beinhaltet: Modifizieren (E5) der Teilsätze von Abstrahlelementen (ER), die jeweils Strahlformungen in den Richtungen der Referenzempfänger (RR) bewirken, so dass die Abstrahlelemente des Teilsatzes, in dem die Phasenverzerrung erkannt wird, über wenigstens zwei modifizierte Teilsätze verteilt werden.

2. Verfahren nach Anspruch 1, bei dem die Modifikation (E5) von Teilsätzen von Abstrahlelementen, die jeweils Strahlformungen in den Richtungen der Referenzempfänger (RR) bewirken, so erfolgt, dass die Abstrahlelemente des Teilsatzes, in dem die Phasenverzerrung erkannt wird, über wenigstens zwei modifizierte Teilsätze verteilt werden, die jeweils Strahlformungen in den Richtungen der Referenzempfänger (RR) bewirken, die sich von dem Referenzempfänger (RR) unterscheiden, für den eine Phasenverzerrung eines Abstrahlelements erkannt wurde.

3. Verfahren nach einem der vorherigen Ansprüche, bei dem die Referenzempfänger (RR) räumlich gleichmäßig um die aktive Antenne (ANT) verteilt werden.

4. Verfahren nach einem der vorherigen Ansprüche, bei dem die Referenzempfänger (RR) in Bezug auf die Mittelebene der aktiven Antenne (ANT) so angeordnet sind, dass ihr Elevationswinkel gleich einer Mindestelevationsschwelle ist, auf deren Basis die Antenne mit den Satelliten kommunizieren können muss, und in einer Distanz von der Antenne von mehr als dem Zehnfachen der maximalen Kommunikationswellenlänge mit den Satelliten.

5. Verfahren nach einem der vorherigen Ansprüche, bei dem die Anzahl (N) von Abstrahlelementen (ER) der aktiven Antenne (ANT) größer ist als die Summe der Anzahl von Satelliten (M) und der maximalen Anzahl von Referenzempfängern (RR) in den Richtungen, in denen Strahlformungen gleichzeitig von einem selben Antennenelement durchgeführt werden.

6. Verfahren nach Anspruch 5, bei dem die Anzahl (N) von Abstrahlelementen (ER) der aktiven Antenne (ANT) mehr als das 1,3fache der Summe der Anzahl von Satelliten (M) und der maximalen Anzahl von Referenzempfängern (RR) in den Richtungen erfolgt, in denen Strahlformungen gleichzeitig von einem selben Antennenelement durchgeführt werden.

7. Verfahren nach einem der vorherigen Ansprüche, bei dem, wenn eine Phasenverzerrung auf einem Abstrahlelement erkannt wird, der Wert der Phasenverzerrung inkremental modifiziert wird, bis der Phasenverzerrungswert identifiziert ist, der von dem Abstrahlelement zu subtrahieren ist, um die gewünschte Gesamtleistung auf dem Referenzempfänger zu finden.

8. System zum Bestimmen einer Phasenverzerrung in dem Signal, das von wenigstens einem der Abstrahlelemente (ER) einer aktiven Antenne (ANT) am Boden übertragen wird, die Signale mit dem räumlichen Vielfachzugriffsverfahren SDMA in den Raum aussendet, umfassend wenigstens drei Referenzempfänger (RR), die in Bezug auf die Mittelebene der aktiven Antenne (ANT) so angeordnet sind, dass ihr Elevationswinkel gleich einer Mindestelevations schwelle ist, auf deren Basis die Antenne mit den Satelliten kommunizieren können muss, und in einer Distanz von der Antenne von mehr als dem Zehnfachen der maximalen Kommunikationswellenlänge mit den Satelliten, umfassend eine elektronische Steuereinheit (UCE), die zum Durchführen des Verfahrens nach einem der vorherigen Ansprüche ausgelegt ist.

9. System nach Anspruch 8, bei dem die Referenzempfänger (RR) räumlich gleichmäßig um die aktive Antenne (ANT) herum verteilt sind.

## Claims

1. Method for determining a phase bias in the signal transmitted by at least one of the radiating elements (ER) of an active antenna (ANT) on the ground, emitting signals into space using a space-division multiple access SDMA method, the method comprising the steps consisting of:
- beamforming (E1) by way of dephased combination of the signals emitted by the radiating elements (ER) in the direction of each satellite of a set of satellites;
- iteratively performing, over an interval of time (Δt), the steps consisting of:
• beamforming (E2) in the direction of each reference receiver (RR) of a set of reference receivers comprising between three and ten reference receivers on the ground around the active antenna (ANT), using a subset of at least three radiating elements (ER) of the radiating elements (ER) of the active antenna (ANT);
• for each reference receiver (RR), comparing (E3), to a threshold, the difference between the value of a measurement of the power received by each reference receiver (RR) and the sum, out of the radiating elements (ER) of the subset beamforming in the direction of the reference receiver (RR), of the differences between the equivalent isotropically radiated power in the direction of the reference receiver and the free-space path loss of each radiating element of the subset;
• detecting (E4) a phase bias, when the difference is greater than the threshold, for a radiating element (ER) of the subset pointing at a corresponding reference receiver (RR); and
• modifying (E5) the subsets of radiating elements (ER) pointing (E2) at the reference receivers (RR), when a phase bias is detected, for as long as the radiating element having a phase bias is not determined;
wherein modifying (E5) the subsets of radiating elements (ER) pointing (E2) at the reference receivers (RR) comprises: modifying (E5) the subsets of radiating elements (ER) respectively beamforming in the directions of the reference receivers (RR), such that the radiating elements of the subset in which the phase bias is detected, are distributed over the at least two modified subsets.

2. Method according to Claim 1, wherein the modification (E5) of the subsets of radiating elements, respectively beamforming in the directions of the reference receivers, (RR) is carried out so that the radiating elements of the subset in which the phase bias is detected, are distributed over at least two modified subsets, respectively beamforming in the directions of reference receivers (RR), other than the reference receiver (RR) for which a phase bias of a radiating element has been detected.

3. Method according to one of the preceding claims, wherein the reference receivers (RR) are evenly spatially distributed around the active antenna (ANT).

4. Method according to one of the preceding claims, wherein the reference receivers (RR) are positioned with respect to the average plane of the active antenna (ANT) such that their elevation angle is equal to a minimum elevation threshold starting from which the antenna has to be able to communicate with satellites, and at a distance from the antenna that is greater than ten times the maximum wavelength for communication with satellites.

5. Method according to one of the preceding claims, wherein the number (N) of radiating elements (ER) of the active antenna (ANT) is greater than the sum of the number of satellites (M) and of the maximum number of reference receivers (RR) in the directions in which beamforming is carried out simultaneously by one and the same antenna element.

6. Method according to Claim 5, wherein the number (N) of radiating elements (ER) of the active antenna (ANT) is greater than 1.3 times the sum of the number of satellites (M) and of the maximum number of reference receivers (RR) in the directions, in which beamforming is carried out simultaneously by one and the same antenna element.

7. Method according to one of the preceding claims, wherein, when a phase bias is detected on a radiating element, the value of said phase bias is modified incrementally, until identification of the phase bias value to be subtracted from said radiating element in order to recover all of the desired power on the reference receiver.

8. System for determining a phase bias in the signal transmitted by at least one of the radiating elements (ER) of an active antenna (ANT) on the ground, emitting signals into space using a space-division multiple access SDMA method, comprising at least three reference receivers (RR) positioned with respect to the average plane of the active antenna (ANT) such that their elevation angle is equal to a minimum elevation threshold, starting from which the antenna has to be able to communicate with satellites, and at a distance from the antenna that is greater than ten times the maximum wavelength for communication with satellites, and comprising an electronic control unit (UCE) configured to implement the method according to one of the preceding claims.

9. System according to Claim 8, wherein the reference receivers (RR) are evenly spatially distributed around the active antenna (ANT).
